# EUROPEAN PATENT APPLICATION

(11) **EP 1 378 810 A2**
(43) Date of publication of application: **07.01.2004**
(21) Application number: 03010848.4
(22) Date of filing: 14.05.2003
(51) Int. Cl.: G06F 1/00

(54) **System and methods to regulate use of consumer devices and services**

(30) Priority: 21.06.2002 US 177277
(71) Applicant: MICROSOFT CORPORATION, Redmond, Washington 98052-6399 (US)
(72) Inventor: Aiu, Marcus Tai-Tong, Palo Alto, California 94301 (US); Saxena, Samir Tiongson, Mountain View, California 94043 (US)
(74) Representative: Grünecker, Kinkeldey, Stockmair & Schwanhäusser Anwaltssozietät

(57) **Abstract**

The described systems and arrangements regulate use of consumer devices and services. In one implementation, a control allowances data file is automatically downloaded from a networked server. The control allowances data file specifies one or more criteria against which use of a device or a service hosted by the device should be restricted with respect to a particular user. The criteria are periodically evaluated against device or service use to determine whether user access to a device and/or service hosted by an application executing on the device should be restricted based on at least a portion of the criteria.

## Description

### TECHNICAL FIELD

This invention pertains to regulating user access to networked consumer devices and services.

### BACKGROUND

In today's media saturated society, parents face the daunting task of trying to limit their children's access to consumer devices and technologies such as television, the Internet, Instant Messaging, cell phone use, and other technologies that can be harmful if abused. This situation becomes even more difficult when children use consumer devices and services away from home such as at school or at an Internet café. Additionally, in many cases, both parents work and have less time to monitor the activities of their children and to make sure that the kids are living by the rules of the household.

The following systems and arrangements address these and other difficulties of controlling access to consumer devices and services.

### SUMMARY

The described systems and arrangements regulate use of consumer devices and services. In one implementation, a control allowances data file is automatically downloaded from a networked server. The control allowances data file specifies one or more criteria against which use of a device or a service hosted by the device should be restricted with respect to a particular user. The criteria are periodically evaluated against device or service use to determine whether user access to a device and/or service hosted by an application executing on the device should be restricted based on at least a portion of the criteria.

### BRIEF DESCRIPTION OF THE DRAWINGS

The same numbers are used throughout the drawings to reference like features and components.

Fig. 1 shows an exemplary system to provide control allowances for consumer devices and technologies.

Fig. 2 is a block diagram showing further aspects of the exemplary client computing device of Fig. 1.

Fig. 3 shows an exemplary procedure to regulate use of consumer devices and services hosted by one or more applications.

### DETAILED DESCRIPTION

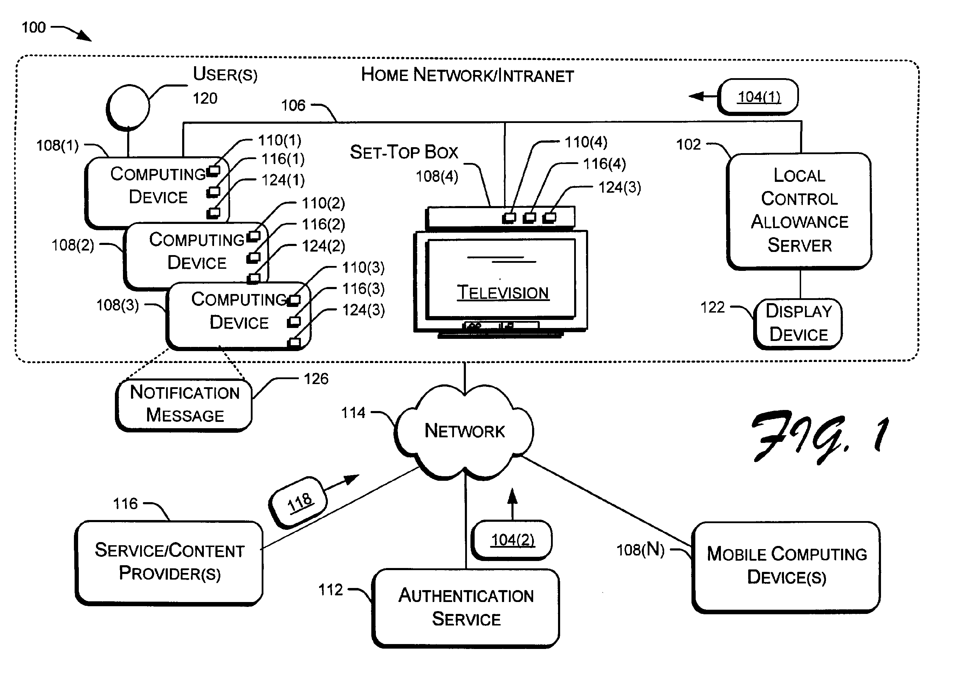

Fig. 1 shows an exemplary system 100 to provide control allowances for consumer devices and technologies. System 100 includes local control allowances server 102 and one or more computing device(s) 108. Control allowances server 102, in this example, distributes control allowances as one or more electronic files 104(1) over home network 106 to any number of client computing devices 108. Control allowances 104(1) are evaluated by respective control allowance (CA) evaluation applications 110, which execute at corresponding computing devices 108, to regulate corresponding device and/or technology use.

In one implementation, control allowances are also distributed to local server 102 and/or client device(s) 108 via a remote authentication server 112, which is coupled to home network 106 across public network 114 (e.g., wireless, terrestrial, satellite, the Internet, an Intranet, and/or other networks). The remote server distributes the control allowances as one or more electronic files 104(2). For purposes of discussion, control allowances in general and unless otherwise indicated are hereinafter referred to as control allowances "104"-regardless of whether the particular source server is the local server 102 or remote server 112.

Computing device(s) 108 include, for example, video game machines, set-top boxes, televisions (TVs), telephones, cell phones, personal computers, personal digital assistants (PDAs), computing enabled "smart devices" such as home appliances, peripheral devices (e.g., a digital camera, a printer or scanner), and so on. In one implementation, the allowances server 102 is also a client computing device 108 such as a set-top box coupled to one or more televisions.

Computing device(s) 108 host one or more consumer applications 116 such as a Web browser, instant messaging, e-mail, word processor, multimedia, spreadsheet, Video-On-Demand or Pay Per View service and/or other types of applications. Consumer applications 116 may access program data from local or remote data sources as one or more electronic files 118. For purposes of discussion, program data includes, for example, Web pages, e-mail, digital broadcast content, instant messaging files, and/or just about any type of content that may be utilized by an application 116 executing on a computing device 108.

Remote data sources include service/content provider(s) 120, which are coupled to client device(s) and local control allowances server across public network 114 (e.g., wireless, terrestrial, satellite, the Internet, an Intranet, and/or other networks). Service/content provider(s) 120 provide technology services and/or deploy program data that can be accessed or otherwise utilized by consumer applications 116. Examples of service/content provider(s) 120 include Web servers, broadcast media servers, video-on-demand (VOD) servers, and so on. As used herein, program data refers to the type of data (e.g., Web pages, e-mail, image and audio files, and so on) that might be accessed or otherwise used by a consumer application 116.

### Distribution of Control Allowances

Each client device 108 is configured to automatically synchronize with a specific local or remote server 102 or 112 to obtain an electronic copy of allowance criteria 104 Such automatic synchronization at the client device 108 is performed responsive to client device 108 boot-up operations, user 120 log on operations, user 120 instantiation of an application 116, use of an application 116 by a user to log onto a particular service, and/or the like. In one implementation, such synchronization can be performed manually at the client device 108.

In one implementation, allowances 104 are respectively synchronized between authentication server 112 and local allowances server 102 such that control allowances 104(1) and 104(2), when synchronized, are substantially identical.

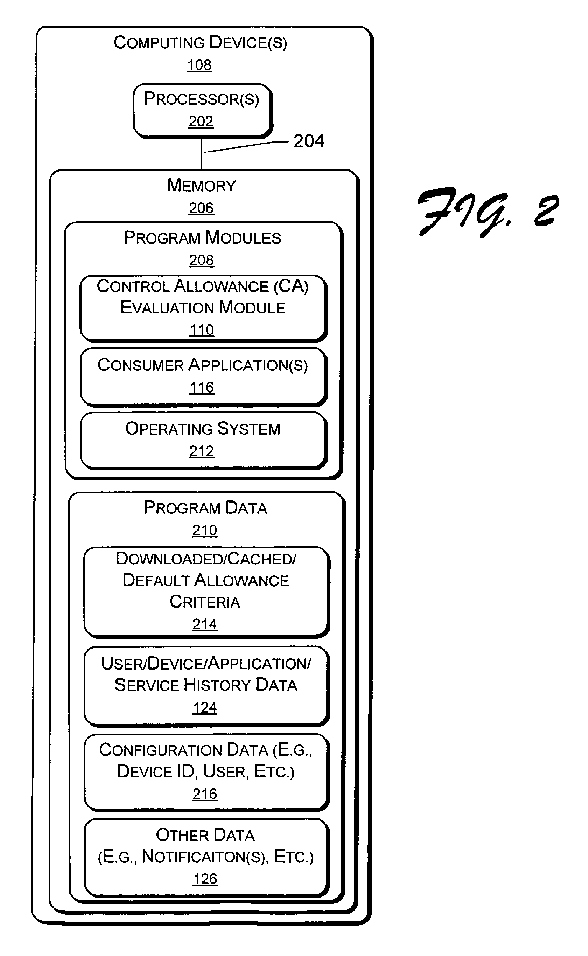

Client device(s) 108 utilize a Universal Resource Identifier (URI) 108 to synchronize control allowances 104 with the local or remote server 102 or 112. The URI is stored as configuration data (i.e., configuration data 216 of Fig. 2) at each respective device 108. The URI further specifies any combination of other data such as a computing device 108 identifier, current user information, and so on. This other data is used by the server to map and communicate appropriate control allowances 104 to the requesting client device 108.

Exemplary client device 108 synchronization criteria can be described as follows. Client device(s) 108 that do not generally connect to public network 114 (e.g., wireless, terrestrial, satellite, and/or the Internet) when booting up, download control allowances as one or more electronic files 104(1) from local allowances server 102. For device(s) 108 such as a cell phone, game system, and/or the like, that always connect over public network 114 during device boot-up procedures, control allowances are downloaded from authentication server 112 across public network 114 as one or more electronic files 104(2).

In one implementation, when remote server 112 is not available for download of control allowances 104(2) over the public network 114, control allowances 104(1) are downloaded from local allowances server 102, if available. In the event that no server 102 or 112 is available for control allowances 104 download, a local cached or default copy of control allowances 104 (i.e., see, cached allowances 214 of Fig. 2) is utilized by the device 108.

### Control Allowance Specification

An administrative entity logs onto either local allowances server 102 or authentication server 112 to generate or otherwise modify allowance criteria 104. In one implementation, administrative access to allowance criteria 104 is provided by a respective embedded Web server (not shown), wherein the criteria 104 are communicated as one or more Web pages for display by a Web browser on a physical display device (e.g., display device 122). In this example, the Web browser may be executing on a client device 108, the local allowances server 102, or any other computing device such as a mobile computing device 108(N) (e.g., a mobile phone, etc.) that is coupled over network 112.

Control allowances 104 can be based on a virtually unlimited number measures or criteria, as suitable to regulating individual, total, and/or incremental use of device 108 and/or application 116 hosted technologies. Such criteria include, for example, user identity, device type, time, number of device accesses, total or incremental cost of device/service use, a user's age, and so on. Accordingly, control allowances 104 are substantially customizable, flexible, and scalable across many different users, devices, and technologies.

For instance, a scope of allowance 104 may indicate that a particular user 120 can only engage in a particular number of instant messaging sessions per day or week, can watch only 10 hours of television a week, can only spend up to $50 on extra cell phone charges in a month and so on.

Control allowances 104 that are "user centric" are based on at least one individual user 120 rather than specific device(s) 108 or application(s) 116. However, one could define the user as anyone that interacts with a particular device. Users 120 may be assigned different allowances 104 for different types of devices 108 or applications/services 116. In addition, these control allowances work across similar devices 108 and applications 116. For instance, if a child is blocked from watching TV in their room, we wouldn't want a situation where they could go to another room and side step the control allowance 104. Similarly such TV watching restrictions should be in place even when the child was visiting their grandparents in a different household.

Time-based control allowance criteria 104 indicate a particular amount of time within a specified time period that a user 120 can access a particular device and/or service. Time periods can be specified in different ways, for example, by day, week, month, year, start date and end date, start time and end time, and so on. For instance, time-based criteria may be specified to indicate that a particular user can access a device or technology, only for some number of hours per day, per week, per month, or the like.

Control allowances 104 are generated and maintained in a file structure. Such generation and maintenance can be accomplished in a number of different manners such as via a user interface, command lines, word processors, mark-up language editors, and the like. Such a file structure is set-up so that any number of specific instances of devices 108 and services (i.e., hosted by applications) 116) can be grouped under any number of custom generic device/service categories. Such custom generic service device/service categories are specified by an administrative entity during generation of control allowances 104 data structure. Generic device categories include, for example, cell phone, television, game machine, Internet, instant messaging, e-mail, and or other categories. Specific instances of devices/services organized under such generic categories can be indicated by phone numbers, account numbers, log on names, and so on).

TABLE 1 illustrates portions of an exemplary control allowances 104 file structure.

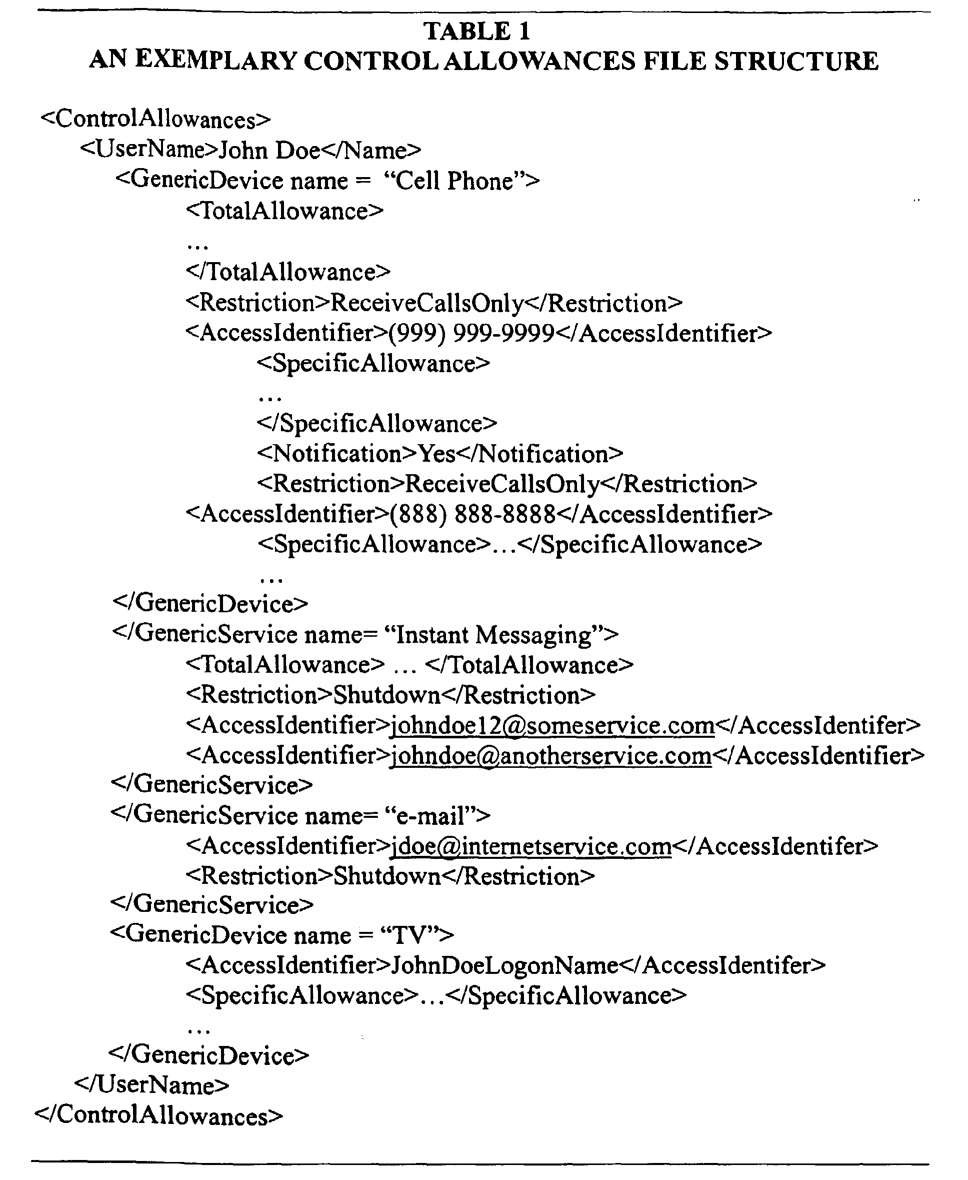

The information of TABLE 1 is organized with respect to customized tags in a data format such as Extended Markup Language (XML). For instance, the <ControlAllowances> and </ControlAllowances> tags encapsulate the allowance criteria data structure. The <UserName> ... </UserName> tag pair specify a particular user for which control allowances are to be specified. In this example, the specified user is "John Doe". Generic device category data associated with the specified user is specified between the <GenericDevice name = "..."> and </GenericDevice> tags. Generic service technology category data is specified between </GenericService name= "..."> and </GenericService> tags.

Each generic device/service category has a substantially unique name that is specified between quotes of the <GenericDevice name = "..."> or </GenericService name= "..."> tags. Each named generic device/service category includes one or more substantially unique user access IDs (i.e., located between respective <AccessIdentifier> and </AccessIdentifier> tag pairs) to specify device/service user access data. Each access identifier substantially uniquely specifies information used by the corresponding user to access the indicated device/service.

Allowance criteria data structure 116 of TABLE 1 identifies total and incremental scopes of allowance that apply to specific device(s)/service(s) in each generic device/service category. In this example, total use allowances are specified via "<TotalAllowance> ... </TotalAllowance>" tag pairs, whereas incremental use allowances are specified via the "<SpecificAllowance> ... <SpecificAllowance>" tag pairs.

Total scopes of allowance apply to all user device/service access(es) with respect to a particular generic device/service. Incremental or specific scopes of allowance apply to specific device/service accesses (i.e., with respect to a particular generic device/service. For instance, a total scope of allowance may indicate that cell phone access for a specific user is not to exceed one (1) hour a day, regardless of whether several cell phones are used that day by a particular user. A specific use allowance may indicate that a particular cell phone (identified in this example via access information such as a telephone number) can only be used for 15 minutes a day.

Specific scopes of allowance are enforced even when a total scope of allowance specified for that generic category has not been met. Whereas, trigger of a total scope of allowance takes precedence over corresponding specific scope(s) of allowance.

For instance, consider that a specific scope of allowance indicates that a particular e-mail service can be used by a particular individual for 1 hour, and the individual user has used the particular service for 10 minutes. If a corresponding total scope of allowance (i.e., with respect to the category under which the particular e-mail service is specified) expires, the individual's access to the particular e-mail service will be terminated or otherwise restricted, regardless of the additional 50 minutes of use that are specified in the specific scope of allowance.

Restrictions of functionality to be enforced when a particular allowance is met are indicated via <Restriction> ... </Restriction> tag pairs. In this example, restrictions include scope from some reduction of device/service functionality to actual shutdown of the device/service. Such restrictions are customizable and flexible since they are based on the levels of control that is desired as well as the particular functionality and purpose of each respective device/service.

In the example of TABLE 1, the user is "John Doe" and control allowances have been defined for different generic device and service categories that are respectively indicated as: (a) "Cell Phone" device(s), "Instant Messaging" service(s); (c) "e-mail"service(s); and (d) "TV" device(s). Two instances of cell phone telephone numbers are identified (i.e., "(999) 999-9999" and "(888) 888-8888"). Two instant messaging user accounts are specified (i.e., johndoe1234@someservice.com and johndoe5678@anotherservice.com). A single e-mail account is indicated (i.e., jdoe@)internetservice.com), as well as a logon name (i.e., JohnDoeLogonName") corresponding to a television or set-top box logon name for a specific user.

Although Table 1 specifies control allowances 104 for only one (1) user 120 and several device/service categories, it can be appreciated that the allowances criteria data structure of TABLE 1 can be used to specify control allowances 104 or any number of different users 120, devices 108, and services (i.e., hosted by application(s) 116). Additionally, although TABLE 1 illustrates only telephone number, user or log-on name, internet address, instant messaging, and e-mail account user access information, user access information extends to any information that can be used by an individual to access a device and/or service. Moreover, although TABLE 1 illustrates syntax and structure with XML, the control allowance criteria data structure 116 may be specified in other manners such as via other markup language(s), ASCII text, and so on.

### Control Allowance Evaluation and Enforcement

To enforce device 108 or application centric allowances, the device/application need only be used (e.g., turned on, instantiated or the like), whereupon control allowance (CA) module 110 can monitor respective usage against control allowance 104 criteria. To enforce user centric allowances 104, the user 120 of a device 108 or application 116 is required to log onto each device/application being used. In this example, user access to client device(s) 108 and/or specific services (e.g., e-mail, instant messaging, etc.) via application(s) 116 hosted by client device(s) 108 is recorded and regulated based on username(s) provided during respective log-on operations in combination with criteria specified in corresponding control allowances 104.

CA evaluation module 110 stores information corresponding to device 108 and/or application 108 log on history, utilization, and the like, into history file 124, which is stored into non-volatile memory (i.e., portions of memory 206 of Fig. 2). History file 124 is periodically updated by CA evaluation module 119 to reflect information corresponding to current and past device/service use (e.g., the amount of time that a user accesses a device 108 and/or hosted service(s) 116 during a current session, over all sessions, within a predetermined amount, number of e-mails sent, number of phone calls made, etc.).

CA evaluation module 110 compares received allowance criteria 104 to data in history file 124 to determine if the device 108 or hosted service should be restricted based on the allowance criteria 104. If a scope of allowance indicated by received allowance criteria 112 is met, indicating that a particular device 108 or application 116 be restricted in some manner (e.g., shut down, or otherwise reduced in functionality (e.g., an e-mail application may be configured to only read e-mail and not edit or send e-mail), and so on), CA evaluation module 110 displays a notification message or video (e.g., message/video 126, see also the <Notification> [Yes/No] </Notification> tag pair of TABLE 1) before restricting the device and/or application.

For instance, for a certain amount of time (e.g., 5 minutes) prior to restriction, the current user 120 may optionally be notified via display of notification message/video 126 that the device and/or service (via a corresponding application 116) will be restricted (e.g., shut down). Notification 126 may be displayed at periodic time intervals prior to any restriction activities to allow a user 120 enough time to log off the device 108 and/or application 116 hosted service(s).

In one implementation, notification message(s) 126 provide for administrative override of any corresponding device 108/application 116 restriction via authentication of an administrative indication (e.g., a username/password pair). If triggered allowance criteria 112 are overridden, the corresponding device/service is not restricted as indicated by control allowance criteria 104.

### An Exemplary Client Computing Device

Fig. 2 is a block diagram showing further aspects of the exemplary client computing device 108 of Fig. 1. The computing device 108 includes one or more processors 202 coupled across bus 204 to system memory 206. Processor(s) 202 process various computer-program instructions to control the operation of client device 108. Bus 204 is used by the processor 202 to transfer data between the processor 202, system memory 206, and/or other components of the client device (e.g., when client 108 is embodied as a set-top box other components include, for example, one or more tuners, broadcast signal encoders/decoders, etc.).

Bus 204 represents one or more of any of several types of bus structures, for example, a memory bus or memory controller, a peripheral bus, an accelerated graphics port, and a processor or local bus using any of a variety of bus architectures (e.g., an Industry Standard Architecture (ISA) bus, a Micro Channel Architecture (MCA) bus, an Enhanced ISA (EISA) bus, a Video Electronics Standards Association (VESA) local bus, a Peripheral Component Interconnects (PCI) bus also known as Mezzanine bus, and so on).

System memory 206 includes a variety of computer-readable media to store various information and/or data. Such media may be any available media that is accessible by the processor 202 (e.g., volatile random access memory (RAM), non-volatile read-only memory (ROM), flash memory (EEPROM), removable and non-removable storage media, and so on).

Program modules 208 portion of memory 206 may be described in the general context of computer-program instructions that can be executed by processor(s) 202. Generally, program modules 208 include routines, programs, objects, components, data structures, etc., that perform particular tasks or implement particular abstract data types. Not only are processor(s) 202 configured to fetch and execute computer-program instructions and data 210 respectively from portions of memory 206, but portions of program modules 208 may be executed on a remote processing device that is linked to computing device 108 through a communications network. Accordingly, program modules 208 and program data 210 may be located in both local and remote computer storage media including memory storage devices that are coupled to the client device 108.

Program modules 208 of computing device 108 include control allowances (CA) evaluation module 110, one or more consumer applications 116, and an operating system 212 to provide a runtime environment. In this implementation, the CA evaluation module 110 executes at a higher priority than consumer application(s) 116. This is so the CA evaluation module 110 can restrict functionality of application(s) 116 based on control allowances 104. Program modules 208 further include, for example, other modules (not shown) such as a basic input/output system (BIOS), device drivers, and so on.

Data 210 includes, for example, downloaded/cached allowance criteria 214, which represents any combination of allowance criteria 104(1) and/or 104(2), user/device/application/service history data 124, configuration data 216 (e.g., device ID, user ID, user information, etc.), and other data 126, for example, such as notification/override messages, web pages, and so on.

The computing device 108 may further include other components, which are not shown for simplicity purposes. For instance, the client is typically equipped with hardware and/or software to present a graphical user interface to a viewer, by which the viewer can view images generated by application(s) 110 and/or 116 (e.g., to access Internet system network services, browse the Web, engage in instant messaging sessions, send email, etc.). Other possible components might include a network connection (e.g., modem, ISDN modem, etc.) to provide connection to network 106 and/or 114, an IR interface, display, power resources, etc. A remote control may also be provided to allow the user to control the client 108.

### An Exemplary Procedure to Provide Control Allowances

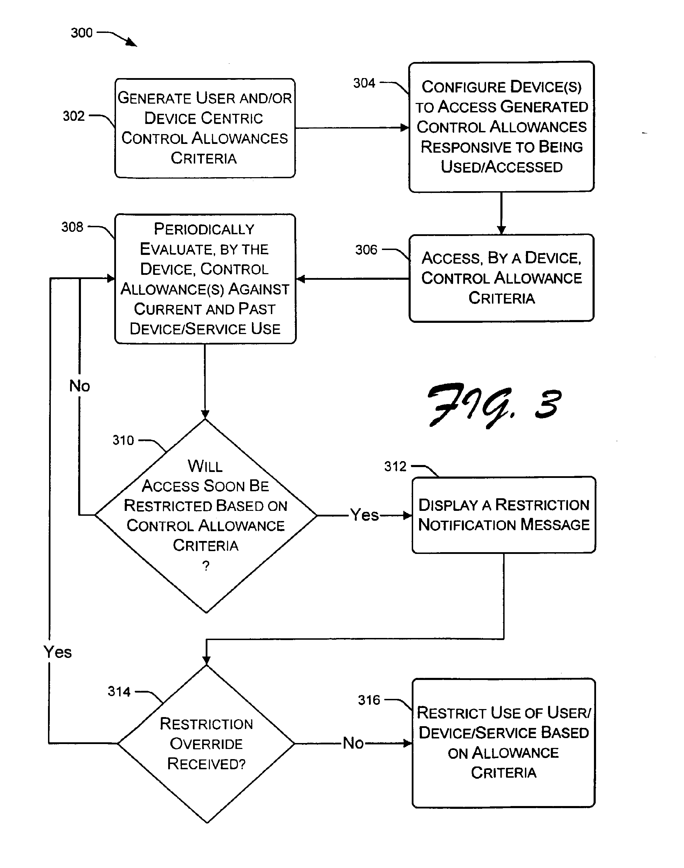

Fig. 3 shows an exemplary procedure 300 to regulate use of consumer devices 108 and services hosted by one or more applications 116. For purposes of discussion, operations of procedure 300 are described in reference to components of Figs. 1 and 2. In one implementation, each of the operations of procedure 300 are performed at least in part by control allowances (CA) evaluation module 110 executing at a respective device 108. In another implementation, operations represented by block 302 are performed at some other computing device such as via one of the local or remote servers 102 or 112.

At block 302, control allowances 104 are specified and stored as one or more files in a control allowances server (e.g., any combination of local and/or remote servers 102 and 112). At block 304, client computing device(s) 108 are configured to automatically download control allowances 104 from local and/or remote servers 102 or 112 according to predetermined synchronization criteria. Such synchronization criteria may specify that automatic download is to be performed responsive to device 108 boot-up operations, user log-on operations, control allowance 116 updates, manual download, and/or the like.

At block 306, one or more device(s) 108, responsive to predetermined criteria (e.g., a successful/failed download) access downloaded or previously cached control allowances 214. At block 308, accessed control allowances 214 are periodically evaluated against history data 124 to determine current and past user/device/service use. Such current/past history data is dynamically updated by the device (e.g., by CA evaluation module 110, a device driver, and/or the like). At block 310, the procedure 300 determines if access to the device 108 or a service hosted by an application 116 executing on the device 108 should be restricted in a short amount of time based on evaluated control allowances 104. The procedure continues at block 308 if it is determined that access to the device 108 or service is not pending restriction (e.g., shut down or otherwise reduced in functionality).

At block 312, it having been determined that access to the device 108 or a service will be restricted, the procedure presents (e.g., displays and/or plays an audible sound) a notification 126 to a user 120 that the device/service will soon be reduced in functionality based on the evaluated allowances 214. At block 314, it is determined whether a device/service restriction override instruction has been received from an administrative entity. If not, use of the device/service is restricted at block 316. It can be appreciated that use of the restricted device/service may subsequently be resumed responsive to receiving an authorized override indication and/or updated allowance criteria 214 pertaining to criteria upon which such a restriction was imposed.

### Computer Readable Media

An implementation of exemplary subject matter to regulate use of consumer devices and services may be stored on or transmitted across some form of computer-readable media. Computer-readable media can be any available media that can be accessed by a computer. By way of example, and not limitation, computer readable media may comprise "computer storage media" and "communications media."

"Computer storage media" include volatile and non-volatile, removable and non-removable media implemented in any method or technology for storage of information, such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media.

The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

### Conclusion

The described arrangements and procedures provide for a high level customizable and scalable architecture to regulate use of consumer devices and services. Although the arrangements and systems to provide control allowances for consumer devices and services have been described in language specific to structural features and methodological operations, the arrangements and procedures as defined in the appended claims are not necessarily limited to the specific features or operations described. Rather, the specific features and operations are described to meet statutory requirements and disclosed as preferred forms of implementing the claimed subject matter.

## Claims

1. A method to regulate use of consumer devices and services, the method comprising:
automatically downloading a control allowances data file from a networked server, the control allowances data file specifying criteria against which use of a device or a service hosted by the device should be restricted with respect to a particular user; and
periodically evaluating the criteria against device or service use to determine whether user access to a device and/or service hosted by an application executing on the device should be restricted based on at least a portion of the criteria.

2. A method as recited in claim 1, wherein the criteria is based on any combination of one or more of time, the particular user, a number of e-mails, a number of phone calls, cost, and a number of instant messaging sessions.

3. A method as recited in claim 1, wherein the criteria indicate that the device or application should be shut down or reduced in functionality responsive to meeting a particular criterion of the criteria.

4. A method as recited in claim 1, wherein the criteria is user, device, and/or service centric.

5. A method as recited in claim 1, wherein the method further comprises restricting use of the device or service based on the criteria.

6. A method as recited in claim 1, wherein the method further comprises restricting use of the device or service with respect to the particular user based on the criteria.

7. A method as recited in claim 1, wherein the device is a game machine, a set-top box, a personal computer, a cell phone, a handheld computing device, a laptop, a personal digital assistant, or a home appliance.

8. A computer-readable medium comprising computer-program instructions executable by a processor to regulate use of consumer devices and services, the computer-program instructions comprising instructions to perform a method as recited in claim 1.

9. A computing device to regulate use of consumer devices and services, the computing device comprising a processor coupled to a memory, the memory comprising computer-program instructions executable by the processor, the computer-program instructions for performing a method as recited in claim 1.

10. A computer-readable medium comprising computer-program instructions executable by a processor to regulate use of consumer devices and services, the computer-program instructions comprising instructions for:
specifying criteria to regulate use of a device or a service hosted by an application executing at the device;
configuring the device to download the criteria from a network server responsive to predetermined actions; and
configuring the device to evaluate the criteria after successful download to regulate use of the device or the application.

11. A computer-readable medium as recited in claim 10, wherein the criteria regulates access by one or more users to the device or application.

12. A computer-readable medium as recited in claim 10, wherein the predetermined actions comprise boot-up operations performed by the device, user log on operations, instantiation of an application hosted by the device, or use of the application to log onto a particular service.

13. A computer-readable medium as recited in claim 10, wherein the criteria are based on any combination of time, a user, a number of e-mails, a number of phone calls, a cost, and a number of service sessions.

14. A computer-readable medium as recited in claim 10, wherein the criteria restrict access to any one or more the Internet, an e-mail application, an instant messaging service, a digital broadcast service, or a telephone service.

15. A computer-readable medium as recited in claim 10, wherein the computer-program instructions further comprise instructions for configuring the device to evaluate default criteria after an unsuccessful attempt to download the criteria, the default criteria being evaluated to regulate use of the device or the service.

16. A computer-readable medium as recited in claim 10, wherein the computer-program instructions further comprise instructions for restricting use of the device or service based on the criteria or based on default criteria stored by the device to regulate use of the device or the service.

17. A computer-readable medium as recited in claim 10, wherein the computer-executable instructions further comprise instructions for:
determining that use of the device or service is to be restricted based on the criteria;
receiving an override indication; and
responsive to receiving the override indication, not restricting the device or service.

18. A method to regulate use of consumer devices and services, the method comprising performing multiple operations as recited by gerunds in the computer-readable medium of claim 10.

19. A computing device to regulate use of consumer devices and services, the computing device comprising a processor coupled to a memory, the memory comprising computer-executable instructions as recited in claim 10, the computer-executable instruction being executable by the processor.

20. A computing device to provide control allowances for consumer technology, the computing device comprising:
a processor;
a memory coupled to the processor, the memory comprising computer-executable instructions, the processor being configured to fetch and execute the computer executable instructions for:
requesting download of control allowances from a networked server;
responsive to receiving the control allowances, evaluating the control allowances to determine whether the device should restrict access to functionality hosted by the device; and
responsive to not receiving the control allowances from the networked server, evaluating a default set of control allowances to determine whether the device should restrict access to functionality hosted by the device.

21. A computing device as recited in claim 20, wherein the networked server is located in a home network, intranet, or on the Internet.

22. A computing device as recited in claim 20, wherein the computing device is a gaming device, a set-top box, a personal computer, a peripheral device, or a mobile device.

23. A computing device as recited in claim 20, wherein the control allowances are based on any combination of time, user, and service-based criteria.

24. A computing device as recited in claim 20, wherein the instructions for requesting download of the control allowances are performed responsive to a boot-up operation of the computing device, receiving an indication from the networked server of an update, or a user log-on event.

25. A computing device as recited in claim 20, wherein the functionality hosted by the device corresponds to shutting down the device or restricting use of an application executing on the computing device.

26. A computing device as recited in claim 20, further comprising:
determining that criteria specified by the control allowances will be met in a certain amount of time; and
presenting a notification message to a user of the computing device, the notification message indicating that access to the functionality will automatically be restricted in the certain amount of time.

27. A computing device to regulate use of consumer devices and services, the computing device comprising:
means for automatically downloading a control allowances data file from a networked server, the control allowances data file specifying criteria against which use of a device or a service hosted by the device should be restricted with respect to a particular user; and
means for periodically evaluating the criteria against device or service use to determine whether user access to a device and/or service hosted by an application executing on the device should be restricted based on at least a portion of the criteria.

28. A computing device as recited in claim 27, wherein the criteria is based on any combination of one or more of time, the particular user, a number of e-mails, a number of phone calls, cost, and a number of instant messaging sessions.

29. A computing device as recited in claim 27, wherein the computing device is a game machine, a set-top box, a personal computer, a cell phone, a handheld computing device, a laptop, a personal digital assistant, or a home appliance.

30. A computing device as recited in claim 27, further comprising means for restricting use of the device or service based on the criteria.

31. A data structure to regulate use of a device or service hosted by an application executing on the device, the data structure comprising:
a first data field indicating a user;
a second data field indicating a generic device or service;
a third data field corresponding to a specific instance of the generic device or service; and
a fourth data field indicating one or more scopes of allowance within which access to the a specific instance by the user is to be restricted.

32. A computer-readable medium comprising a data structure as recited in claim 31.
